# EUROPEAN PATENT SPECIFICATION

(11) **EP 4 361 018 B1**
(45) Date of publication and mention of the grant of the patent: **20.08.2025**
(21) Application number: 22863939.9
(22) Date of filing: 21.04.2022
(51) Int. Cl.: B63B 79/10, A62C 3/10, B63B 43/00, G08B 25/00, H04M 11/00, B63B 79/40

(54) **SAFETY SYSTEM, LAND SYSTEM, ON-SHIP SYSTEM, AND CONTROL METHOD**
SICHERHEITSSYSTEM, LANDSYSTEM, BORDSYSTEM UND STEUERUNGSVERFAHREN
SYSTÈME DE SÉCURITÉ, SYSTÈME TERRESTRE, SYSTÈME EMBARQUÉ SUR UN NAVIRE ET PROCÉDÉ DE COMMANDE

(30) Priority: 31.08.2021 JP 2021140870
(43) Date of publication of application: 01.05.2024
(73) Proprietor: Mitsubishi Shipbuilding Co., Ltd., Yokohama-shi Kanagawa 220-8401 (JP)
(72) Inventor: KUCHIKI Yusuke, Yokohama-shi, Kanagawa 220-8401 (JP); TAKEDA Shingen, Yokohama-shi, Kanagawa 220-8401 (JP); KOMIYA Toshiyuki, Yokohama-shi, Kanagawa 220-8401 (JP)
(74) Representative: Studio Torta S.p.A.
(86) International application number: PCT/JP2022/018460
(87) International publication number: WO 2023/032349

(56) References cited:
- CN-A- 107 464 395
- CN-U- 209 972 734
- JP-A- 2009 282 963
- KR-A- 20160 014 422
- KR-A- 20160 134 095
- KR-A- 20180 130 950
- KR-B1- 101 641 787

## Description

### Technical Field

The present disclosure relates to a safety system, a land system, an on-ship system, and a control method.

The present application claims priority based on Japanese Patent Application No. 2021-140870 filed in Japan on August 31, 2021.

### Background Art

When a disaster such as fire or flooding occurs on a ship, a crew member appropriately controls a safety device installed on the ship to respond to the disaster. For example, PTL 1 discloses a flood notification system that notifies crew members of information for appropriately performing initial response and evacuation to flooding when flooding occurs on a ship. When a disaster occurs, there is a possibility that there will be a shortage of crew members due to the need to respond to the disaster and guide passengers to evacuate. Depending on a situation on the ship, actions of the crew members may be restricted and sufficient disaster response may not be possible.

### Citation List

### Patent Literature

[PTL 1] Japanese Unexamined Patent Application Publication No. 2020-194219;
[PTL 2] KR 101641787 B1;
[PTL 3] KR 20160014422 A;
[PTL 4] CN 209972734 U; and
[PTL 5] CN 107464395 A.

### Summary of Invention

### Technical Problem

There is a concern that a disaster response may be inadequate when only crew members on a ship respond to the disaster.

The present disclosure provides a safety system, a land system, an on-ship system, and a control method capable of solving the above problems.

### Solution to Problem

According to an aspect of the present disclosure, a safety system includes: an on-ship system that is provided on a ship; and a land system that is provided on land, in which the on-ship system includes a safety detection device and a safety maintenance device that are provided on the ship, a first acquisition unit that acquires information detected by the safety detection device and information indicating a state of the safety maintenance device, a first control unit that controls the safety maintenance device, and a communication unit that communicates with the land system, and the land system includes a second acquisition unit that acquires the information detected by the safety detection device and the information indicating the state of the safety maintenance device through the communication unit, and a second control unit that outputs a control signal for controlling the safety maintenance device to the safety maintenance device through the communication unit.

According to another aspect of the present disclosure, a land system includes: a communication unit that communicates with a safety detection device and a safety maintenance device, which are provided on a ship, through a communication device provided on the ship; an acquisition unit that acquires information detected by the safety detection device and information indicating a state of the safety maintenance device through the communication unit; and a control unit that outputs a control signal for controlling the safety maintenance device to the safety maintenance device through the communication unit.

According to still another aspect of the present disclosure, an on-ship system includes: a safety detection device and a safety maintenance device that are provided on a ship; an acquisition unit that acquires information detected by the safety detection device and information indicating a state of the safety maintenance device; a control unit that controls the safety maintenance device; and a communication unit that transmits the information detected by the safety detection device and the information indicating the state of the safety maintenance device to a land system and receives a control signal for controlling the safety maintenance device from the land system.

According to still another aspect of the present disclosure, a control method of a safety maintenance device provided on a ship, the control method includes: a step of acquiring, by an on-ship system provided on the ship, information detected by a safety detection device provided on the ship and information indicating a state of the safety maintenance device; a step of transmitting, by the on-ship system, the information acquired in the step of acquiring to a land system provided on land; a step of acquiring, by the land system, the information transmitted in the step of transmitting; and a step of transmitting, by the land system, a control signal for controlling the safety maintenance device to the safety maintenance device.

### Advantageous Effects of Invention

According to the safety system, the land system, the on-ship system, and the control method described above, monitoring related to ship safety and control of a safety device, which can generally only be performed on a ship, can be performed on land as well as on a ship.

### Brief Description of Drawings

Fig. 1 is a diagram showing an example of a safety system according to an embodiment.
Fig. 2 is a diagram showing an example of safety devices according to the embodiment.
Fig. 3A is a first diagram showing an example of an operation of the safety system according to the embodiment.
Fig. 3B is a second diagram showing an example of an operation of the safety system according to the embodiment.
Fig. 4 is a diagram showing an example of priorities in controls of the safety system according to the embodiment.
Fig. 5 is a diagram showing an example of a hardware configuration of the safety system according to the embodiment.

### Description of Embodiments

### <Embodiment>

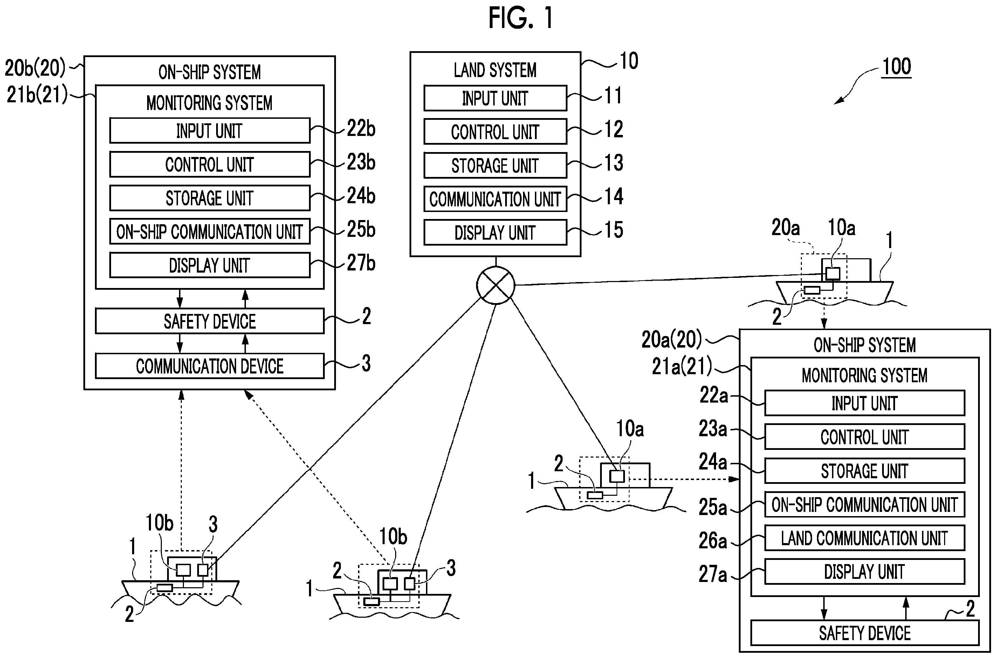

Hereinafter, a safety system of the present disclosure will be described with reference to Figs. 1 to 5.

### (System Configuration)

Fig. 1 is a diagram showing an example of a safety system according to an embodiment.

The safety system 100 includes an on-ship system 20 mounted on each of one or a plurality of ships 1 and a land system 10 provided in a monitoring station on land. The land system 10 and the on-ship system 20 of each ship 1 are connected to each other via a network in a communicable manner. The on-ship system 20 is a system that monitors and controls a safety device in the ship 1. In general, the ship 1 is provided with the on-ship system 20 for monitoring the safety on the ship or responding to a disaster. The on-ship system 20 constantly monitors the ship, and when a disaster such as fire or flooding occurs, the on-ship system 20 responds to the disaster by operating the safety device 2. On the other hand, in the safety system 100 of the present embodiment, in addition to the on-ship system 20, the land system 10 having the same function and configuration as the on-ship system 20 is provided on land, and remote monitoring of a plurality of ships 1 is also performed from the land system 10. When a disaster occurs on the ship 1, the safety device 2 included in the ship 1 is remotely controlled to respond to the disaster.

The on-ship system 20 is classified into an on-ship system 20a, which includes a safety device 2 and a monitoring system 21a monitoring and controlling the safety device 2, and an on-ship system 20b, which includes a safety device 2, a communication device 3, and a monitoring system 21b. In the on-ship system 20a, the monitoring system 21a communicates with the land system 10, and the land system 10 monitors and controls the safety device 2 through the monitoring system 21a. In the on-ship system 20b, the communication device 3 communicates with the land system 10, and the land system 10 monitors and controls the safety device 2 through the communication device 3 without going through the monitoring system 21b. When no particular distinction is required, the on-ship systems 20a and 20b may be referred to as the on-ship system 20 and the monitoring systems 21a and 21b may be referred to as the monitoring system 21.

### (Safety Device)

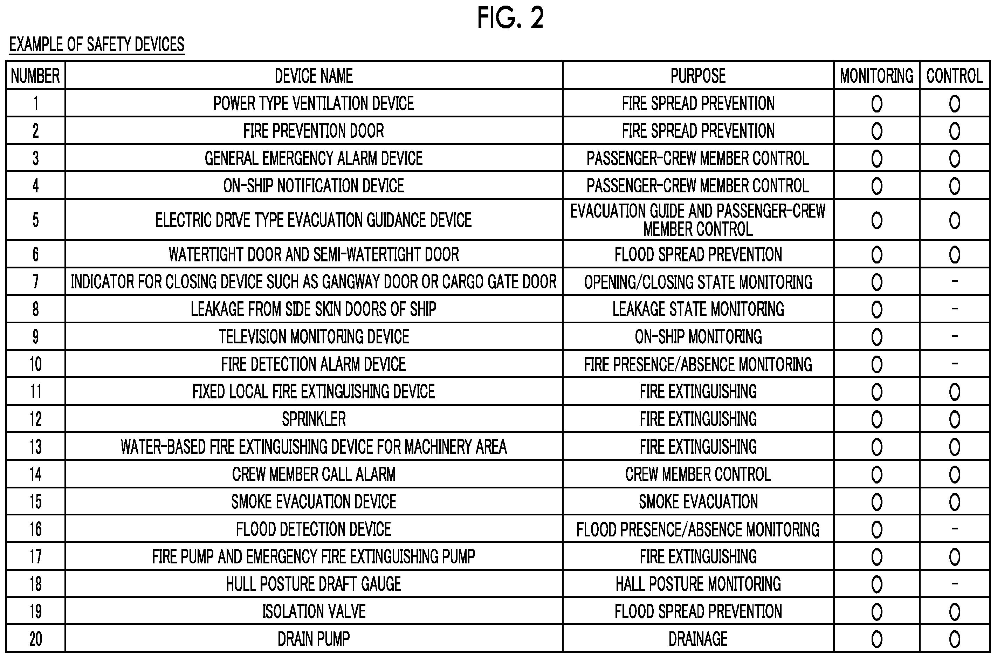

The safety device 2 includes sensors for detecting a safety situation on the ship or facility for maintaining the safety on the ship. An example of the safety devices 2 is shown in Fig. **2****.** A power type ventilation device of an item number 1 is equipment for fire spread prevention. For example, in the event of fire, control is performed such that oxygen is stopped so as not to be supplied to a place where the fire has occurred. The monitoring system 21 can monitor an operation state (whether it is being activated or stopped) of the power type ventilation device and can control (activation, stop) the operation of the power type ventilation device. A fire prevention door of an item number 2 is also a device for preventing the spread of the fire, and the monitoring system 21 can monitor the state of the fire prevention door and control the opening and closing of the fire prevention door. A general emergency alarm device and an on-ship notification device of item numbers 3 and 4 are notification devices for controlling passengers and crew members. The monitoring system 21 can monitor and control statuses of these devices. Regarding the devices with item numbers 5, 6, 11 to 15, 17, and 19 to 20, the monitoring system 21 can monitor and control the status of each device. For example, in the case of a watertight door and a semi-watertight door of an item number 6, the spread of flooding can be prevented by closing the watertight door, and in the case of a sprinkler of an item number 12, the fire can be extinguished by operating the sprinkler. Devices of item numbers 7 to 10, 16, and 18 are sensors for detecting a disaster situation on the ship and a state of a hull (for example, a posture of the hull) related to the disaster. The monitoring system 21 can acquire and monitor information detected by each device (sensor). For example, in the case of a fire detection alarm device of an item number 10, the location of the fire can be determined based on a position of the fire detection alarm device, in which the fire is detected, installed in the ship. Similarly, in the case of a flood detection device of an item number 16, the flood occurrence location can be determined based on a position of the flood detection device, in which the flooding is detected, installed in the ship.

The safety devices illustrated in Fig. 2 is an example. For example, it is required to provide a safety center on a ship in safety of life at sea (SOLAS), and in the safety center, it is required that functions (operation, control, monitoring, or a combination thereof) of the safety devices listed below, which are also illustrated in Fig. 2, can be used. That is, the devices are: 1. power type ventilation device, 2. fire prevention door, 3. general emergency alarm device, 4. on-ship notification device, 5. electric drive type evacuation guidance device, 6. watertight door and semi-watertight door, 7. indicator for closing device such as gangway door or cargo gate door, 8. leakage from inner bow door, outer bow door, stern door, or any other side skin doors of ship, 9. television monitoring device, 10. fire detection alarm device, 11. fixed local fire extinguishing device, 12. sprinkler and equivalent device, 13. water-based fire extinguishing device for machinery area, 14. crew member call alarm, 15. atrium smoke evacuation device, 16. flood detection device, 17. fire pump and emergency fire extinguishing pump. A monitor or a control panel that monitors these safety devices are installed in the safety center. As for the ship 1 to which the SOLAS is not applied, generally, a control room is provided with various safety devices 2 defined with regulations and a control system for controlling these safety devices 2. The on-ship system 20 of the present embodiment corresponds to a control room provided with a safety center and a safety device defined in the SOLAS, and a safety device and a control system in a ship to which SOLAS is not applied.

When a disaster such as fire or flooding occurs, the fire detection alarm device (item number 10 in Fig. 2) or the flood detection device (item number 16 in Fig. 2) are operated, and the crew member recognizes the occurrence of fire or the like. The crew member operates the control panel of the safety center or the control system to notify other crew members of an alarm (item number 14 in Fig. 2), and control the appropriate safety device 2 to perform response to prevent the spread of fire and flooding. When the functions of the safety center or the control system are maintained in the event of a disaster and the situation on the ship does not affect the operation of the crew member, the on-ship system 20 can respond to the disaster. However, when a situation occurs in which the crew member cannot make a calm judgment and take measures at the safety center due to the fire or flooding (for example, a flame or smoke is approaching, a large inclination is caused by the flooding, or the like), the disaster response using the on-ship system 20 is not possible. In recent years, there has been a tendency to require labor savings for the crew members on the ship 1, and in the labor-saving ship 1, there is a possibility that there will be a shortage of crew members available for disaster response. Therefore, in the present embodiment, by constructing the land system 10 on the land side that has the same functions and configuration as the on-ship system 20, the safety device 2 of the ship 1 can be monitored and controlled regardless of the situation on the ship or the shortage of crew members.

### (Configuration of On-ship System 20a)

The on-ship system 20a includes the monitoring system 21a and the safety device **2.** The monitoring system 21a is configured with a computer and includes an input unit 22a, a control unit 23a, a storage unit 24a, an on-ship communication unit 25a, a land communication unit 26a, and a display unit 27a.

The input unit 22a is configured by using an input device such as a keyboard, a mouse, a touch panel, and a button. The input unit 22a receives a user's input to the monitoring system 21a. The input unit 22a outputs the content of the received input to the control unit 23a.

The control unit 23a performs control of the safety device 2, display control of the display unit 27a, communication control with the safety device 2 via the on-ship communication unit 25a, communication control with the land system 10 via the land communication unit 26a, and the like. For example, the control unit 23a acquires information (for example, the occurrence of fire and the location of fire) detected by the safety device 2 (sensors exemplified in item numbers 7 to 10, 16, and 18 in Fig. 2) and an operation state (activation/stop, opening/closing, or the like) of the safety device 2 (control target device exemplified in item number 1 in Fig. 2) through the land communication unit 26a, and displays the information on the display unit 27a. The control unit 23a generates a control signal (for example, issuing a crew member call alarm, stopping the power type ventilation device, or the like) to the safety device 2 based on the operation of the crew member and outputs the generated control signal to the safety device 2 to be controlled through the land communication unit 26a.

The storage unit 24a is configured by using a storage device such as an HDD or a flash memory and stores the information or the like acquired from the safety device 2.

The on-ship communication unit 25a communicates with the safety device 2. For example, the on-ship communication unit 25a receives, from the safety device 2, information indicating a situation on the ship and an operation state of the safety device 2 in real time. The on-ship communication unit 25a transmits the control signal to the safety device 2.

The land communication unit 26a communicates with the land system 10. For example, the land communication unit 26a receives, from the safety device 2, the information indicating the situation on the ship or the operation state of the safety device 2 through the on-ship communication unit 25a in real time and transmits the information to the land system 10. The land communication unit 26a receives the control signal transmitted by the land system 10 to the safety device 2 and transmits the control signal to the safety device 2 through the on-ship communication unit 25a.

The display unit 27a is configured by using a display device such as a liquid crystal display. The display unit 27a displays any information based on an instruction of the control unit 23a. For example, the display unit 27a displays the information received from the safety device 2 (the information detected by the sensors, the operation state of the safety device 2, or the like).

The safety device 2 is a device (sensor) for detecting information related to the safety of a ship as illustrated in Fig. 2 or a device for maintaining safety. For example, when the safety device 2 is a sensor or a detection device, the safety device 2 includes a sensor body and a communication device. When the safety device 2 is a safety maintenance device such as a power type ventilation device or a crew member call alarm, the safety device 2 includes an actuator, a control device of an actuator, and a communication device.

### (Configuration of On-ship System 20b)

The on-ship system 20b includes the monitoring system 21b, the safety device 2, and the communication device 3. The monitoring system 21b is configured with a computer and includes an input unit 22b, a control unit 23b, a storage unit 24b, an on-ship communication unit 25b, and a display unit 27b. The configurations and functions of these functional units are the same as those of the input unit 22a, the control unit 23a, the storage unit 24a, the on-ship communication unit 25a, and the display unit 27a described above, respectively. The difference from the on-ship system 20a is that in the on-ship system 20a, the monitoring system 21a relays communication between the safety device 2 and the land system 10, whereas in the on-ship system 20b, the monitoring system 21b does not relay communication with the land system 10. In the on-ship system 20b, the communication device 3 relays the communication between the safety device 2 and the land system 10. For example, the communication device 3 receives, from the safety device 2, the information indicating the situation on the ship or the operation state of the safety device 2 in real time and transmits the information to the land system 10. The communication device 3 receives the control signal transmitted by the land system 10 to the safety device 2 and transmits the control signal to the safety device 2. That is, in the case of the on-ship system 20b, even when the monitoring system 21b malfunctions or the like, the land system 10 can monitor and control the safety device 2 of the ship 1.

### (Configuration of Land System 10)

The land system 10 is configured with a computer and includes an input unit 11, a control unit 12, a storage unit 13, a communication unit 14, and a display unit 15.

The input unit 11 is configured by using an input device such as a keyboard, a mouse, a touch panel, and a button. The input unit 11 receives a user's input to the land system 10. The input unit 11 outputs the content of the received input to the control unit 12.

The control unit 12 controls various processes executed by the land system 10. For example, the control unit 12 performs display control of the display unit 15, communication control via the communication unit 14, and the like.

The storage unit 13 is configured by using a storage device such as an HDD or a flash memory and stores the information or the like transmitted from the safety device 2.

The communication unit 14 communicates with the on-ship system 20. For example, the communication unit 14 acquires, from the on-ship system 20, the information indicating the situation on the ship detected by the safety device 2 or the operation state of the safety device 2 in real time. The communication unit 14 transmits the control signal for the safety device 2 to the on-ship system 20.

The display unit 15 is configured by using a display device such as a liquid crystal display. The display unit 15 can display any information based on an instruction of the control unit 12. For example, the display unit 15 displays the situation on the ship (presence or absence of fire or flooding, a video of a television monitoring device, or the like) received from the on-ship system 20.

The land system 10 is constructed by mirroring the safety center or the control room on the ship and has the same functions and configurations as the safety center on the ship and the like. The land system 10 is, so to speak, a safety center or a control room constructed on the land side. There is a monitoring person on land, and the monitoring person monitors a plurality of ships 1. For example, when a disaster or the like occurs in any of the ships 1, the monitoring person monitors data displayed on the display unit 15 and controls the safety device 2 to prevent the spread of the disaster. The input unit 11 receives an input of instruction information for controlling the safety device 2 by the monitoring person, and the control unit 12 transmits the instruction information, which is input to the on-ship system 20, via the communication unit 14.

### (Operation)

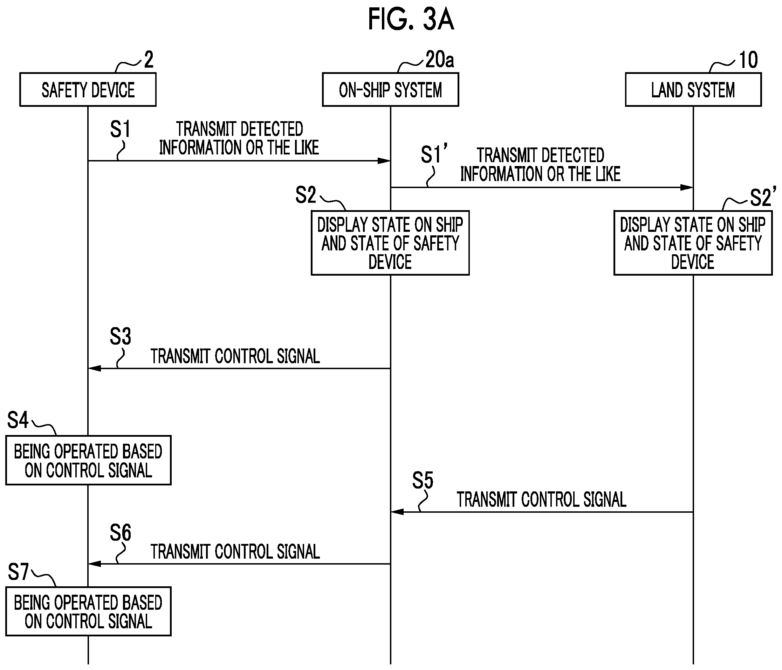

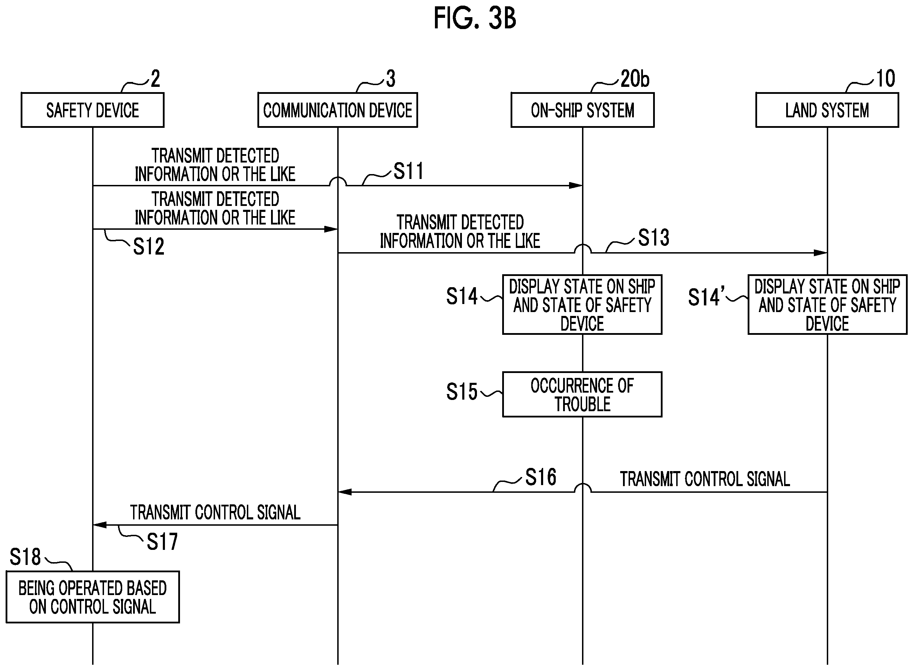

Next, the operation of the safety system 100 will be described with reference to Figs. 3A and 3B. As an example, it is assumed that the ship 1 is provided with the safety center, and the crew members monitor the ship at the safety center.

### (In Case of On-ship System 20a)

Fig. 3A shows an example of an operation of monitoring and control for the safety device 2 of the ship 1 provided with the on-ship system 20a. As an example, it is shown an example of the operation in which when a disaster occurs on the ship, the on-ship system 20a and the land system 10 cooperate (for example, some of the safety devices 2 are controlled in the on-ship system 20a, and other safety devices 2 are controlled from the land system 10) to respond to the disaster. First, each of the plurality of safety devices 2 transmits the information related to the disaster (presence or absence of fire, presence or absence of flooding, inclination of the ship, or the like) detected by the safety device and the information related to the operation state (in operation, stopped, or the like) of the safety device to the on-ship system 20a (step S1). In the on-ship system 20a, the on-ship communication unit 25a acquires the information or the like detected by the safety device **2.** The on-ship communication unit 25a outputs the acquired information to the control unit 23a and the land communication unit 26a. The land communication unit 26a acquires the information transmitted from the safety device 2 through the on-ship communication unit 25a and transmits the information to the land system 10 (step S1').

The control unit 23a of the on-ship system 20a outputs the information transmitted from the safety device 2 to the display unit 27a. For example, the display unit 27a displays the information indicating safety on the ship and the information indicating the operation state of each safety device (step S2). The crew member determines whether or not it is necessary to respond to the disaster while monitoring the information displayed on the display unit 27a. When a disaster occurs, the crew member operates the control panel at a safety center or the like to control the safety device 2.

In the land system 10, the control unit 12 acquires the information transmitted by the land communication unit 26a through the communication unit 14 and outputs the acquired information to the display unit 15. The display unit 15 displays the information indicating safety on the ship and the information indicating the operation state of each safety device (step S2'). The monitoring person on land determines whether or not it is necessary to respond to the disaster while monitoring the information displayed on the display unit 15. When a disaster occurs, the monitoring person operates the land system 10 to remotely control the safety device 2.

When a disaster occurs on the ship, information indicating the occurrence of the disaster is transmitted to the monitoring system 21a and the land system 10 by the above process. In the present example, it is assumed that a disaster has occurred. In this case, the crew member determines that it is necessary to respond to the disaster, selects the necessary safety device 2, operates the control panel of the safety center, and performs an operation on the selected safety device **2.** The input unit 22a receives an input of an instruction operation by the crew member, and the control unit 23a generates a control signal to be sent to the safety device 2, which is a control target, based on the instruction operation. Thereafter, the control unit 23a transmits the control signal to the safety device 2 through the on-ship communication unit 25a (step S3).

The safety device 2, in which the control signal is received from the on-ship system 20a, is operated based on the control signal (step S4). For example, when a control signal is issued to close a fire prevention door in the event of fire, the control device for the fire prevention door (safety device 2) controls the actuator in response to the transmitted control signal and performs an operation to close the fire prevention door.

On the other hand, in the monitoring station on land, when the monitoring person determines that the response to the disaster is necessary, the operation on the safety device 2 that needs to be controlled is input to the land system 10. For example, even in a case where predetermined time has elapsed since information indicating the occurrence of the disaster was displayed on the display unit 15, when a control signal for operating the safety device 2 to be controlled (for example, a sprinkler) is not issued from the on-ship system 20a (in other words, when the operation state of the safety device to be controlled is not changed to an appropriate state), the monitoring person on land determines that a response is necessary and inputs an instruction operation to be sent to the safety device 2 to the land system 10. Alternatively, in order to speed up the initial response by simultaneously responding on the ship and on land, the on-ship system 20a and the land system 10 may be assigned responsibility for the safety devices 2 in advance, and an instruction operation to be sent to the safety device 2 may be input to the land system 10 in accordance with the assigned responsibility. When the instruction operation is input, the input unit 11 receives the input of the instruction operation by the monitoring person, and the control unit 12 generates a control signal to be sent to the safety device 2 based on the instruction operation. Thereafter, the control unit 12 transmits the control signal to the on-ship system 20a through the communication unit 14 (step S5). When a control signal is transmitted from the land system 10, the land communication unit 26a receives the control signal and transmits the control signal to the safety device 2 through the on-ship communication unit 25a (step S6). As a result, the safety device 2 is operated by the remote operation from land.

The safety device 2, in which the control signal is received from the land system 10, is operated based on the control signal (step S7). For example, when a control signal is issued to operate a sprinkler in the event of fire, the control device for the sprinkler (safety device 2) controls the actuator in response to the transmitted control signal and performs an operation to inject fire extinguishing water.

As described above, according to the present embodiment, the safety device 2 can be monitored and controlled even in the land system 10. Therefore, even when the safety device 2 cannot be controlled from the on-ship system 20 for some reason, the safety device 2 can be controlled from the land system 10 to prevent the spread of the disaster. For example, when a video from the television monitoring device (the item number 9 in Fig. 2) is monitored from land and suspicious fire, which is not noticed by the crew member on the ship, or a flame, which cannot be detected by the fire detection alarm device, is noticed, by quickly operating the safety device 2 from land and notifying the crew member on the ship, early detection and early response to disasters becomes possible.

### (In Case of On-ship System 20b)

Next, with reference to Fig. 3B, monitoring and control of the safety device 2 of the ship 1 provided with the on-ship system 20b will be described. Fig. 3B shows an example of an operation in a case where some trouble occurs on the on-ship system 20b side. First, the safety device 2 transmits the information related to a disaster detected by the safety device and the information related to an operation state of the safety device to the on-ship system 20b (step S11). In parallel, the safety device 2 transmits the information related to the disaster detected by the safety device and the information related to the operation state of the safety device to the communication device 3 (step S12). When the communication device 3 receives the information transmitted from the safety device 2, the communication device 3 transmits the received information to the land system 10 (step S13).

In the on-ship system 20b, the on-ship communication unit 25b acquires the information transmitted from the safety device **2.** The on-ship communication unit 25b outputs the acquired information to the control unit 23b. The control unit 23b outputs the information transmitted from the safety device 2 to the display unit 27b. The display unit 27b displays the information indicating safety on the ship and the information indicating the operation state of each safety device (step S14). The crew member determines whether or not it is necessary to respond to a disaster while monitoring the information displayed on the display unit 27b.

In the land system 10, the control unit 12 acquires the information transmitted by the communication device 3 through the communication unit 14 and outputs the acquired information to the display unit 15. The display unit 15 displays the information indicating safety on the ship and the information indicating the operation state of each safety device (step S14). The monitoring person on land determines whether or not it is necessary to respond to the disaster while monitoring the information displayed on the display unit 15.

When a disaster occurs on the ship, information indicating the occurrence of the disaster is transmitted to the monitoring system 21b and the land system 10 by the above process. In the present example, it is assumed that a disaster has occurred. In this case, normally, the crew member determines that it is necessary to respond to the disaster and performs an operation on the safety device 2. The control unit 23b generates a control signal to be sent to the safety device 2 based on the operation of the crew member. The control unit 23b transmits the control signal to the safety device 2 through the on-ship communication unit 25b, and the safety device 2, in which the control signal is received from the on-ship system 20b, is operated based on the control signal. These operations are the same as in the case of the on-ship system 20a described with reference to Fig. 3A (steps S3 to S4). On the other hand, in the present flowchart, it is assumed that a trouble has occurred such as a shortage of personnel on the ship or a malfunction of the monitoring system 21b, which makes it impossible to control the safety device 2 from the on-ship system 20b (step S15). In this case, a situation may occur in which the crew member is unable to monitor the display unit 27b due to a shortage of personnel or a situation may occur in which a control signal is not generated or transmitted even when the crew member performs an operation on the safety device 2, and thereby a situation occurs in which the safety device 2 is not controlled by the on-ship system 20b.

On the other hand, in the land system 10, when the monitoring person determines that it is necessary to respond to a disaster, the monitoring person performs an operation on the safety device 2 that needs to be controlled by using the land system 10. For example, when the crew member call alarm (item number 14 in Fig. 2) is not issued (for example, the monitoring system 21b does not function due to malfunction, the crew member is not available, or the like) even though the fire detection alarm device (item number 10 in Fig. 2) is operated, or when the flood detection device (item number 16 in Fig. 2) is not operated even though a video transmitted from the television monitoring device (item number 9 in Fig. 2) shows signs of suspected flooding, the monitoring person on land first determines that it is necessary to inform the crew member on the ship of the occurrence of fire and flooding and performs an instruction of the operation of the crew member call alarm (safety device 2) with respect to the land system 10. Thereafter, the control unit 12 generates a control signal for instructing the issuance of the crew member call alarm and transmits the control signal to the communication device 3 through the communication unit 14 (step S16). The communication device 3 receives the control signal transmitted from the land system 10 and transmits the control signal to the safety device 2 (step S17). The safety device 2, in which the control signal is received from the land system 10, is operated based on the control signal (step S18). In the case of this example, the crew member call alarm is issued.

As described above, according to the on-ship system 20b and the land system 10, in addition to the effects obtained by the combination of the on-ship system 20a and the land system 10, the safety device 2 can be controlled from the land system 10 regardless of the state of the monitoring system 21b.

Even in the combination of the on-ship system 20a and the land system 10, unless communication between the land system 10 and the safety device 2 is cut off due to a trouble in the land communication unit 26a, it is possible to respond to a disaster by controlling the safety device 2 from the land system 10 in the same manner as the operation described with reference to Fig. 3B even when a trouble occurs on the on-ship system 20a side. Needless to say, even with the combination of the on-ship system 20b and the land system 10, the same operation as the described with reference to Fig. 3A can be performed.

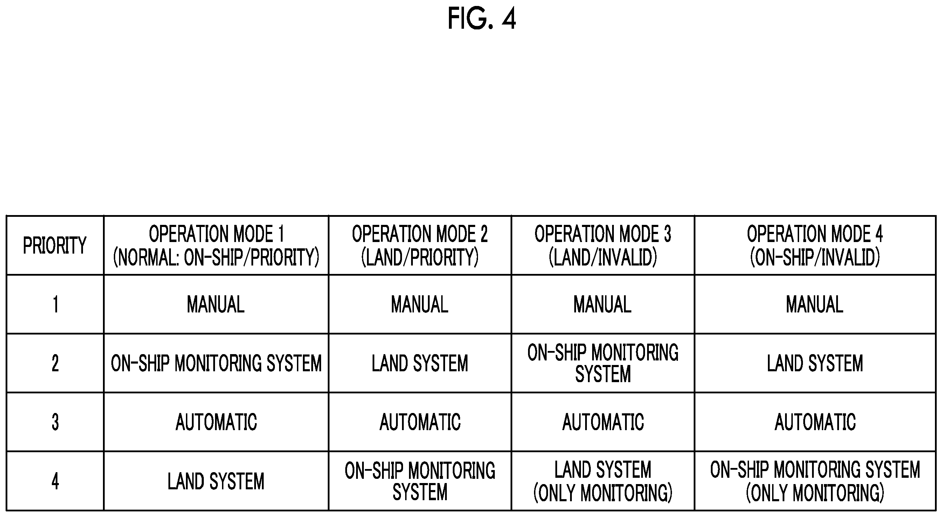

It is possible to provide priorities in controls for the monitoring system 21 and the land system 10. By providing priorities, it is possible to avoid an operation inconsistency in a case where the monitoring system 21 and the land system 10 output control signals having different instruction contents to the same safety device **2.** Fig. 4 shows an example of priorities. (1) An operation mode 1 is a normal priority (initial setting of priority). The highest priority is a control method in which manual control is directly performed on the safety device **2.** For example, a button is installed near the fire prevention door, and the fire prevention door opens and closes when the button is pressed. Even in a case where the control is performed to keep the fire prevention door open by using other methods (for example, automatic control or instructions from the safety center), when the crew member presses the button, the fire prevention door can be closed. The next highest priority is control by the monitoring system 21 of the safety center. For example, even in a case where control is performed with the automatic control of the third priority such as keeping the fire prevention door open (for example, automatic control is set to open the fire prevention door in a state in which the fire detection alarm device is not operated), when the monitoring system 21 controls the fire prevention door to close, the fire prevention door can be closed. The lowest priority is the control from the land system 10. In the operation mode 1, only the safety device 2 that is not controlled by other means can be controlled from the land system 10. Even in the operation mode 1, when a control signal is transmitted from the land system 10 and permission and approval for the control signal are input from the monitoring system 21 on the ship, the control signal may be configured to be handled as a control signal having the same second priority as control by the monitoring system 21.

(2) An operation mode 2 is an operation mode in which the land system 10 is given priority. In the operation mode 2, the first priority is "manual", the second priority is "land system", the third priority is "automatic control", and the fourth priority is "on-ship monitoring system". For example, in a case where the ship 1 is labor-saving and the number of crew members is small, the priority of the operation mode 2 may be set. As a result, it is possible to leave the response in the event of a disaster to the land side. Alternatively, even though the operation mode 1 is set and the fire detection alarm device or the flood detection device is operated, and after that, when a situation occurs where the crew member call alarm is not fired even after the predetermined time has elapsed (when an event occurs where it is assumed that the monitoring system 21 is not functioning), the operation mode 1 may be automatically switched to the operation mode **2.** As a result, basically, although a system is based on the crew members responding to a disaster at the safety center on the ship, in the event that it is no longer possible to respond to a disaster on the ship due to changes in situation on the ship or a shortage of manpower, it is possible to switch to the land-based control.

(3) An operation mode 3 has the same priority as the operation mode 1 and is an operation mode in which only monitoring is permitted from the land system 10. For example, the operation mode 3 is set in the initial setting, and when the monitoring person on land notices anything during the monitoring, the monitoring person separately contacts the crew member via radio or other means. When there is a shortage of crew members or a situation occurs where monitoring at the safety center is not possible due to the occurrence of a disaster on the ship, the mode may be switched from the operation mode 3 to the operation mode 2 or an operation mode 4, which will be described next, by performing an input for switching the operation mode from the monitoring system 21 or the land system 10.

(4) The operation mode 4 is the same priority setting as the operation mode 2 and is an operation mode in which the monitoring system 21 on the ship is set to be invalid or only monitoring is permitted. For example, in a case where the ship 1 is a labor-saving or unmanned ship, the operation mode 4 may be applied.

The operation mode illustrated in Fig. 4 is an example and is not limited thereto. For example, in the operation modes 1 and 2, the third and fourth priorities may be set in reverse. Considering temporal changes in a disaster situation, even after the operation of a certain safety device 2 is once controlled by high priority means, when the predetermined time has elapsed or a situation has been changed (for example, when the safety device 2, which was not operated at that time after the high priority means output the control signal, detects a disaster and is operated or when the safety device 2 detects information with different levels (for example, when inclination of a hull indicated by a hull posture draft gauge worsens or improves)), even when lower priority means outputs a control signal with different contents to the same safety device 2, the control signal may be configured to be valid. Any priorities may be set for each ship 1. The display unit 15 of the land system 10 may display the operation mode for each ship 1. As a result, when a disaster occurs on a certain ship 1, the monitoring person can understand whether only monitoring needs to be performed while leaving control to the ship basically, or whether the control of the safety device 2 needs to be performed in addition to the monitoring.

### (Effects)

As described above, according to the present embodiment, an environment (land system 10) is constructed on land, which is equivalent to the safety center or the like that enables remote operation and reception of information related to the safety devices 2 collected in the safety center or the control room on the ship, and the information (fire detection, flood detection, watertight door, opening/closing of fire prevention door, operation of fire extinguishing device, or the like) related to the safety device 2 on the ship is transmitted to the land system 10, which is a safety center on land, via the communication device 3 or the land communication unit 26a. A monitoring person in charge of monitoring and controlling the system is assigned in the land system 10, and the same work (operation, control, monitoring of the safety devices, or a combination thereof) as at the safety center on the ship is performed on land. When a disaster occurs on the ship 1, a situation on the ship is monitored from the land system 10, and if necessary, the safety device is remotely operated from the land to response to the disastrous situation. As described above, also in the land system 10, which is the safety center on land, by receiving the same information as the monitoring system 21 on the ship, the same monitoring and remote control as the safety center on the ship is possible on the land side. In the land system 10 on land, it is possible to take a calm response without being affected by fire or the inclination caused by flooding. Since the land system 10 can monitor and control the plurality of ships 1 in parallel at the same time, it is possible to contribute to unmanned or labor saving of the ships.

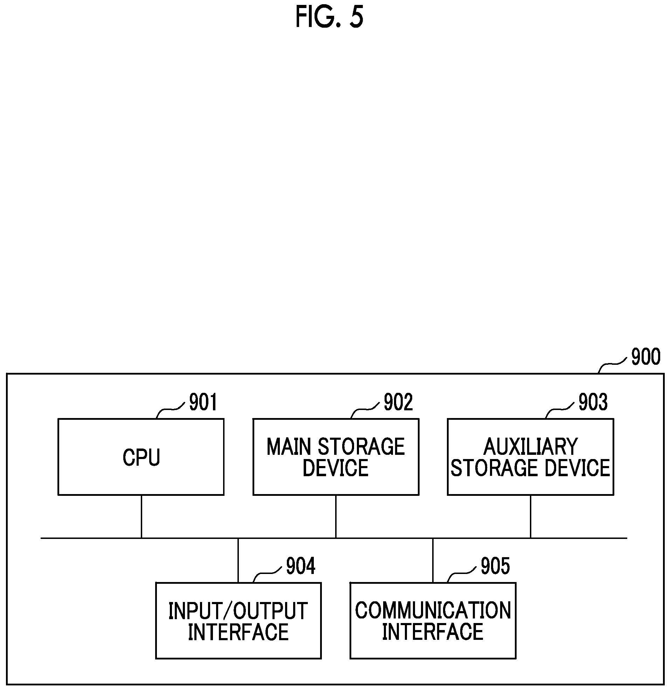

Fig. 5 is a diagram showing an example of a hardware configuration of the safety system according to the embodiment.

A computer 900 includes a CPU 901, a main storage device 902, an auxiliary storage device 903, an input/output interface 904, and a communication interface 905.

The land system 10 and the monitoring system 21 described above are mounted on the computer 900. Further, each above-mentioned function is stored in the auxiliary storage device 903 in the form of a program. The CPU 901 reads the program from the auxiliary storage device 903, loads the program into the main storage device 902, and executes the above processes according to the program. The CPU 901 ensures a storage area in the main storage device 902 according to the program. The CPU 901 ensures a storage area for storing the data being processed in the auxiliary storage device 903 according to the program.

A program for implementing all or some of the functions of the land system 10 and the monitoring system 21 may be recorded on a computer-readable recording medium, and the program recorded on the recording medium may be read by a computer system and executed to perform processes by each functional unit. The term "computer system" as used herein includes hardware such as an OS or peripheral devices. The "computer system" is also assumed to include a homepage providing environment (or display environment) when a WWW system is used. The "computer-readable recording medium" refers to a portable medium such as a CD, DVD, or USB, or a storage device such as a hard disk built in the computer system. When this program is distributed to the computer 900 by using a communication line, the computer 900, which has received the distribution of the program, may load the program into the main storage device 902 and execute the above processes. The above-mentioned program may be a program for implementing some of the above-mentioned functions and further implementing the above-mentioned functions in combination with a program already recorded in the computer system.

According to the safety system, the land system, the on-ship system, and the control method described in the appended claims, monitoring related to ship safety and control of a safety device, which can generally only be performed on a ship, can be performed on land as well as on a ship.

### Reference Signs List

1 ship
2 safety device
3 communication device
10 land system
11 input unit
12 control unit
13 storage unit
14 communication unit
15 display unit
20, 20a, 20b on-ship system
21, 21a, 21b monitoring system
22a, 22b input unit
23a, 23b control unit
24a, 24b storage unit
25a, 25b on-ship communication unit
26a land communication unit
27a, 27b display unit
100 safety system
900 computer
901 CPU
902 main storage device
903 auxiliary storage device
904 input/output interface
905 communication interface

## Claims

1. A safety system (100) comprising:
an on-ship system (20, 20a, 20b) that is provided on a ship (1); and
a land system (10) that is provided on land,
wherein the on-ship system (20, 20a, 20b) includes
a safety detection device and a safety maintenance device for preventing disasters occurring in the ship (1), that are provided on the ship (1),
a first acquisition unit (25a, 25b) that acquires information detected by the safety detection device and information indicating an operation state of the safety maintenance device,
a first control unit (23a, 23b) that controls an actuator included in the safety maintenance device, and
a communication unit (26a, 26) that communicates with the land system (10), and
the land system (10) includes
a second acquisition unit (14) that acquires the information detected by the safety detection device and the information indicating the operation state of the safety maintenance device through the communication unit (26a, 26), and
a second control unit that outputs a control signal for controlling the actuator included in the safety maintenance device to the safety maintenance device through the communication unit (26a, 26),
**characterized in that** after the first control unit (23a, 23b) outputs a control signal to one of the safety maintenance devices, even when the second control unit outputs a control signal to the corresponding safety maintenance device, the control signal is set to be invalid, wherein after the first control unit (23a, 23b) outputs the control signal to one of the safety maintenance devices, when predetermined time elapses or the information detected by the safety detection device is changed, the control signal output to the corresponding safety maintenance device by the second control unit is set to be valid.

2. The safety system (100) according to Claim 1,
wherein the on-ship system (20, 20a, 20b) and the land system (10) acquire the information detected by the same safety detection device and the information indicating the operation state of the same safety maintenance device.

3. The safety system (100) according to any one of Claims 1 or 2,
wherein the safety maintenance device includes at least one of a power type ventilation device, a fire prevention door, a watertight door and semi-watertight door, a fixed local fire extinguishing device, a sprinkler, a fire extinguishing device, a smoke evacuation device, and a fire pump.

4. The safety system (100) according to any one of Claims 1 to 3, wherein a first operation mode in which, after the first control unit (23a, 23b) outputs a control signal to one of the safety maintenance devices, even when the second control unit outputs a control signal to the corresponding safety maintenance device, the control signal is set to be invalid, and
a second operation mode in which, after the second control unit outputs a control signal to one of the safety maintenance devices, even when the first control unit (23a, 23b) outputs a control signal to the corresponding safety maintenance device, the control signal is set to be invalid,
can be set in a switchable manner.

5. A control method of a safety maintenance device provided on a ship (1), the control method comprising:
a step of acquiring, by an on-ship system (20, 20a, 20b) provided on the ship (1), information detected by a safety detection device for preventing disasters occurring in the ship (1) provided on the ship (1) and information indicating an operation state of the safety maintenance device;
a step of controlling, by the on-ship system (20, 20a, 20b), an actuator included in the safety maintenance device;
a step of transmitting, by the on-ship system (20, 20a, 20b), the information acquired in the step of acquiring to a land system (10) provided on land;
a step of acquiring, by the land system (10), the information transmitted in the step of transmitting; and
a step of transmitting, by the land system (10), a control signal for controlling the actuator included in the safety maintenance device to the safety maintenance device,
wherein, after a control signal to one of the safety maintenance devices is output in the step of controlling by the on-ship system (20, 20a, 20b), even when a control signal to the corresponding safety maintenance device is output in the step of transmitting by the land system (10), the control signal is set to be invalid,
wherein, after a control signal to one of the safety maintenance devices is output in the step of controlling by the on-ship system, when predetermined time elapses or the information detected by the safety detection device is changed, the control signal output to the corresponding safety maintenance device in the step of transmitting by the land system is set to be valid.

## Patentansprüche

1. Sicherheitssystem (100), aufweisend:
ein Bordsystem (20, 20a, 20b), das auf einem Schiff (1) bereitgestellt ist; und
ein Landsystem (10), das an Land bereitgestellt ist,
wobei das Bordsystem (20, 20a, 20b) eine Sicherheitserkennungsvorrichtung und eine Sicherheitserhaltungsvorrichtung zur Verhinderung von auf dem Schiff (1) auftretenden Katastrophen aufweist, die auf dem Schiff (1) bereitgestellt sind,
eine erste Erfassungseinheit (25a, 25b), die von der Sicherheitserkennungsvorrichtung erkannte Informationen und Informationen, die einen Betriebszustand der Sicherheitserhaltungsvorrichtung angeben, erfasst,
eine erste Steuereinheit (23a, 23b), die einen in der Sicherheitserhaltungsvorrichtung enthaltenen Aktuator steuert, und
eine Kommunikationseinheit (26a, 26), die mit dem Landsystem (10) kommuniziert, und
das Landsystem (10) eine zweite Erfassungseinheit (14) aufweist, die die von der Sicherheitserkennungsvorrichtung erfassten Informationen und die Informationen, die den Betriebszustand der Sicherheitserhaltungsvorrichtung angeben, über die Kommunikationseinheit (26a, 26) erfasst, und
eine zweite Steuereinheit, die ein Steuersignal zur Steuerung des in der Sicherheitserhaltungsvorrichtung enthaltenen Aktuators über die Kommunikationseinheit (26a, 26) an die Sicherheitserhaltungsvorrichtung ausgibt,
**dadurch gekennzeichnet, dass** nach Ausgabe eines Steuersignals an eine der Sicherheitserhaltungsvorrichtungen durch die erste Steuereinheit (23a, 23b) und bei Ausgabe eines Steuersignals an die entsprechende Sicherheitserhaltungsvorrichtung durch die zweite Steuereinheit dieses Steuersignal auf ungültig gesetzt wird, wobei nach Ausgabe des Steuersignals an eine der Sicherheitserhaltungsvorrichtungen durch die erste Steuereinheit (23a, 23b) das von der zweiten Steuereinheit an die entsprechende Sicherheitserhaltungsvorrichtung ausgegebene Steuersignal auf gültig gesetzt wird, wenn eine vorbestimmte Zeit abgelaufen ist oder die von der Sicherheitserkennungsvorrichtung erfassten Informationen geändert werden.

2. Sicherheitssystem (100) nach Anspruch 1,
wobei das Bordsystem (20, 20a, 20b) und das Landsystem (10) die von derselben Sicherheitserkennungsvorrichtung erfassten Informationen und die Informationen, die den Betriebszustand derselben Sicherheitserhaltungsvorrichtung angeben, erfassen.

3. Sicherheitssystem (100) nach einem der Ansprüche 1 oder 2,
wobei die Sicherheitserhaltungsvorrichtung mindestens eine der folgenden Vorrichtungen aufweist: eine Belüftungsvorrichtung mit Kraftantrieb, eine Brandschutztür, eine wasserdichte Tür und eine wasserbeständige Tür, eine ortsfeste Feuerlöschvorrichtung, eine Sprinkleranlage, eine Feuerlöschvorrichtung, eine Rauchabzugsvorrichtung und eine Feuerlöschpumpe.

4. Sicherheitssystem (100) nach einem der Ansprüche 1 bis 3, wobei eine erste Betriebsart, in der nach Ausgabe eines Steuersignals an eine der Sicherheitserhaltungsvorrichtungen durch die erste Steuereinheit (23a, 23b) und bei Ausgabe eines Steuersignals an die entsprechende Sicherheitserhaltungsvorrichtung durch die zweite Steuereinheit dieses Steuersignal auf ungültig gesetzt wird, und
eine zweite Betriebsart, in der nach Ausgabe eines Steuersignals an eine der Sicherheitserhaltungsvorrichtungen durch die zweite Steuereinheit und bei Ausgabe eines Steuersignals an die entsprechende Sicherheitserhaltungsvorrichtung durch die erste Steuereinheit (23a, 23b) dieses Steuersignal auf ungültig gesetzt wird,
schaltbar eingestellt werden können.

5. Steuerverfahren einer Sicherheitserhaltungsvorrichtung, die auf einem Schiff (1) bereitgestellt ist, wobei das Steuerungsverfahren umfasst:
einen Schritt eines Erfassens von Informationen, die durch eine auf dem Schiff (1) bereitgestellte Sicherheitserkennungsvorrichtung zur Verhinderung von auf dem Schiff (1) auftretenden Katastrophen erkannt werden und von Informationen, die einen Betriebszustand der Sicherheitserhaltungsvorrichtung angeben, durch ein auf dem Schiff (1) bereitgestelltes Bordsystem (20, 20a, 20b);
einen Schritt eines Steuerns eines in der Sicherheitserhaltungsvorrichtung enthaltenen Aktuators durch das Bordsystem (20, 20a, 20b);
einen Schritt eines Übertragens der im Erfassungsschritt erfassten Informationen durch das Bordsystem (20, 20a, 20b) an ein an Land bereitgestelltes Landsystem (10);
einen Schritt eines Erfassens der im Übertragungsschritt übertragenen Informationen durch das Landsystem (10); und
einen Schritt eines Übertragens eines Steuersignals zum Steuern des in der Sicherheitserhaltungsvorrichtung enthaltenen Aktuators an die Sicherheitserhaltungsvorrichtung durch das Landsystem (10),
wobei nach Ausgabe eines Steuersignals an eine der Sicherheitserhaltungsvorrichtungen im Steuerungsschritt durch das Bordsystem (20, 20a, 20b) und bei Ausgabe eines Steuersignals an die entsprechende Sicherheitserhaltungsvorrichtung im Übertragungsschritt durch das Landsystem (10) dieses Steuersignal auf ungültig gesetzt wird,
wobei nach Ausgabe eines Steuersignals an eine der Sicherheitserhaltungsvorrichtungen im Steuerungsschritt durch das Bordsystem das an die entsprechende Sicherheitserhaltungsvorrichtung im Übertragungsschritt durch das Landsystem ausgegebene Steuersignal auf gültig gesetzt wird, wenn eine vorbestimmte Zeit abgelaufen ist oder die von der Sicherheitserkennungsvorrichtung erfassten Informationen geändert werden.

## Revendications

1. Système de sécurité (100) comprenant :
un système embarqué (20, 20a, 20b) qui est disposé sur un navire (1) ; et
un système terrestre (10) qui est installé à terre,
dans lequel le système embarqué (20, 20a, 20b) comporte
un dispositif de détection de sécurité et un dispositif de maintenance de sécurité pour empêcher que des catastrophes se produisent sur le navire (1), qui sont disposés sur le navire (1),
une première unité d'acquisition (25a, 25b) qui acquiert des informations détectées par le dispositif de détection de sécurité et des informations indiquant un état de fonctionnement du dispositif de maintenance de sécurité,
une première unité de commande (23a, 23b) qui commande un actionneur inclus dans le dispositif de maintenance de sécurité, et
une unité de communication (26a, 26) qui communique avec le système terrestre (10), et
le système terrestre (10) comporte
une deuxième unité d'acquisition (14) qui acquiert les informations détectées par le dispositif de détection de sécurité et les informations indiquant l'état de fonctionnement du dispositif de maintenance de sécurité par l'intermédiaire de l'unité de communication (26a, 26), et
une deuxième unité de commande qui émet un signal de commande pour commander l'actionneur inclus dans le dispositif de maintenance de sécurité vers le dispositif de maintenance de sécurité par l'intermédiaire de l'unité de communication (26a, 26),
**caractérisé en ce qu'**après que la première unité de commande (23a, 23b) a émis un signal de commande vers l'un des dispositifs de maintenance de sécurité, même lorsque la deuxième unité de commande émet un signal de commande vers le dispositif de maintenance de sécurité correspondant, le signal de commande est réglé pour être non valide, dans lequel après que la première unité de commande (23a, 23b) a émis le signal de commande vers l'un des dispositifs de maintenance de sécurité, lorsqu'un temps prédéterminé s'écoule ou que les informations détectées par le dispositif de détection de sécurité sont modifiées, le signal de commande émis vers le dispositif de maintenance de sécurité correspondant par la deuxième unité de commande est réglé pour être valide.

2. Système de sécurité (100) selon la revendication 1,
dans lequel le système embarqué (20, 20a, 20b) et le système terrestre (10) acquièrent les informations détectées par le même dispositif de détection de sécurité et les informations indiquant l'état de fonctionnement du même dispositif de maintenance de sécurité.

3. Système de sécurité (100) selon l'une quelconque des revendications 1 ou 2,
dans lequel le dispositif de maintenance de sécurité comporte au moins l'un parmi un dispositif de ventilation de type électrique, une porte coupe-feu, une porte étanche et une porte semi-étanche, un dispositif d'extinction d'incendie local fixe, un gicleur, un dispositif d'extinction d'incendie, un dispositif d'évacuation des fumées et une pompe à incendie.

4. Système de sécurité (100) selon l'une quelconque des revendications 1 à 3, dans lequel un premier mode de fonctionnement dans lequel, après que la première unité de commande (23a, 23b) a émis un signal de commande vers l'un des dispositifs de maintenance de sécurité, même lorsque la deuxième unité de commande émet un signal de commande vers le dispositif de maintenance de sécurité correspondant, le signal de commande est réglé pour être non valide, et
un deuxième mode de fonctionnement dans lequel, après que la deuxième unité de commande a émis un signal de commande vers l'un des dispositifs de maintenance de sécurité, même lorsque la première unité de commande (23a, 23b) émet un signal de commande vers le dispositif de maintenance de sécurité correspondant, le signal de commande est réglé pour être non valide,
peut être réglé de manière commutable.

5. Méthode de commande d'un dispositif de maintenance de sécurité disposé sur un navire (1), la méthode de commande comprenant :
une étape d'acquisition, par un système embarqué (20, 20a, 20b) disposé sur le navire (1), d'informations détectées par un dispositif de détection de sécurité pour empêcher que des catastrophes se produisent sur le navire (1) disposé sur le navire (1) et d'informations indiquant un état de fonctionnement du dispositif de maintenance de sécurité ;
une étape de commande, par le système embarqué (20, 20a, 20b), d'un actionneur inclus dans le dispositif de maintenance de sécurité ;
une étape de transmission, par le système embarqué (20, 20a, 20b), des informations acquises dans l'étape d'acquisition à un système terrestre (10) installé à terre ;
une étape d'acquisition, par le système terrestre (10), des informations transmises dans l'étape de transmission ; et
une étape de transmission, par le système terrestre (10), d'un signal de commande pour commander l'actionneur inclus dans le dispositif de maintenance de sécurité au dispositif de maintenance de sécurité,
dans laquelle, après qu'un signal de commande vers l'un des dispositifs de maintenance de sécurité a été émis dans l'étape de commande par le système embarqué (20, 20a, 20b), même lorsqu'un signal de commande vers le dispositif de maintenance de sécurité correspondant est émis dans l'étape de transmission par le système terrestre (10), le signal de commande est réglé pour être **non** valide,
dans laquelle, après qu'un signal de commande vers l'un des dispositifs de maintenance de sécurité a été émis dans l'étape de commande par le système embarqué, lorsqu'un temps prédéterminé s'écoule ou que les informations détectées par le dispositif de détection de sécurité sont modifiées, le signal de commande émis vers le dispositif de maintenance de sécurité correspondant dans l'étape de transmission par le système terrestre est réglé pour être valide.
